# EUROPEAN PATENT SPECIFICATION

(11) **EP 0 342 026 B1**
(45) Date of publication and mention of the grant of the patent: **18.10.1995**
(21) Application number: 89304769.6
(22) Date of filing: 11.05.1989
(51) Int. Cl.: B01D 61/00, B01D 71/00, C08J 5/18, D01D 5/24

(54) **Microporous membranes having increased pore densities and process for making the same**
Mikroporöse Membranen mit gesteigerter Porendichte und Verfahren zur Herstellung derselben
Membranes microporeuses ayant une densité modifiée de pores et leur procédé de fabrication

(30) Priority: 12.05.1988 US 193327
(43) Date of publication of application: 15.11.1989
(73) Proprietor: HOECHST CELANESE CORPORATION, Somerville, N.J. 08876 (US)
(72) Inventor: Fisher, Harold Manly, Charlotte, NC (US); Leone, Daniel Edward, Charlotte, NC (US)
(74) Representative: De Minvielle-Devaux, Ian Benedict Peter

(56) References cited:
- EP-A- 0 057 328
- EP-A- 0 147 849
- EP-A- 0 210 059
- GB-A- 2 041 821
- US-A- 3 801 404
- US-A- 3 839 240

## Description

The present invention broadly relates to open-celled microporous polypropylene membranes (e.g., in film or hollow fiber form) and to processes of making the same. The microporous membranes of the invention are characterized by increased pore densities and decreased pore sizes as compared to prior art microporous membranes of similar physical geometry. The membranes of the invention are prepared by sequential uniaxial cold and hot stretching (under conditions to be defined below) whereby the cold stretch extension is accomplished in a series of discrete cold stretching steps.

Membranes which possess a microporous, open-celled structure are not new. For example, methods of making microporous membranes have been proposed whereby a crystalline elastic starting film is drawn or stretched at ambient temperatures (i.e., so-called "cold drawing") in an amount of about 10 to about 300 percent of the starting film's original length, with subsequent stabilization by heat setting of the drawn film under tension such that the film is not free to shrink or can shrink only to a limited extent. An example of such a "cold drawing" process is US-A-3,426,754 issued to H.S. Bierenbaum et al on February 11, 1969.

Another technique employed in the art of making microporous membranes is the so-called "solvent stretch" process as exemplified by US-A-4,255,376 issued to J.W. Soehngen on March 10, 1981 and US-A-4,257,997 issued to J.W. Soehngen et al on March 24, 1981. Briefly, the solvent stretch process involves preparing microporous films from a two-component precursor film (i.e., one having an amorphous component and a crystalline component). The precursor film is brought into contact with a swelling agent and longitudinally stretched while still in contact with the swelling agent. Subsequently, the swelling agent is removed while the film is maintained in its longitudinally stretched condition to render the film microporous.

Corona discharge treatments have also been employed in the past to render polymeric films microporous as exemplified by US-A-3,880,966 issued to D. Zimmerman et al on April 29, 1975. In this conventional process, polymeric films are subjected to a corona discharge treatment so as to render the film permeable. The films are then rendered microporous by stretching and heat setting.

Other processes for producing open-celled microporous membranes using sequential "cold" and "hot" stretching steps have also been proposed as exemplified by US-A-3,679,538 issued to M.L. Druin et al on July 25, 1972 and US-A-3,801,692 issued to D. Zimmerman on April 2, 1984, the entire content of these prior-issued patents being expressly incorporated herein by reference. Generally these processes include the steps of cold stretching a non-porous, crystalline, elastic film, thereafter hot stretching the cold stretched film to render it microporous, and finally heat setting the microporous film.

Special techniques have also been proposed for the sequential "cold" and "hot" stretching process. For example, in US-A-3,843,761 issued to H.S. Bierenbaum et al on October 22, 1978, a process is disclosed whereby an annealed film is initially cold stretched and then subsequently subjected to multiple hot stretching steps so as to render a variety of polymeric films microporous. According to US-A-4,138,459, another technique is disclosed whereby polymeric films are rendered microporous by subjecting an annealed film to cold stretching, hot stretching, and heat relaxing steps.

EP-A-0210059 describes a process for the preparation of a microporous polyethylene film by cold stretching an annealed, crystalline precursor film followed by hot stretching the same film. The permeability of the resulting microporous film is improved by controlling both the stretching rates during cold and hot stretching and the sum of the changes in length during each stretching step. The cold stretching step is carried out at a temperature of - 20°C to 70°C, to achieve a cold stretched length of 120 to 160 percent, based on the length of the unstretched precursor film. The hot stretching step is carried out at a temperature in the range from above the temperature in the cold stretching step to a temperature in the range of from 10°C to 25°C less than the crystalline melting point of the resin.

Pore density is an important physical attribute of a microporous membrane since it directly determines the gas flux of the membrane (i.e., permeability). that is, the greater density of the pores in the microporous membrane, the greater the ability of the film to allow a volume of gas to flow through a fixed surface area of the membrane in a fixed period of time. Such permeabilities are usually expressed in terms of "Gurley Values" (sometimes also referred to as "Gurley Seconds"), which is the time required for 10 cm³ of air to pass through 6.45 cm² (1 in²) of membrane from one exterior surface to an opposite exterior surface thereof when a pressure differential of 3039 N/m² (12.2 inches of water) is applied across the membrane. Since permeability is a measure of the ease of mass transfer across the membrane, lower Gurley Values correspond to lower mass transfer times and hence correspond to higher permeabilities and a concomitant greater ease of mass transfer.

The capability of membranes to have a greater ease of mass transfer thereacross is important in many end use applications, such as filter media, solute extraction membranes, blood oxygenation membranes, battery separators, etcetera. However, since the pore density of a microporous membrane (and its resulting permeability) is a function of pore size, in order to increase the pore density of a microporous membrane, the pore size must be correspondingly reduced. While the prior art processes noted above do permit microporous membranes to be produced which have satisfactory permeability properties, there still exists a continual need for improvements.

The present invention provides a process to prepare an open-celled, microporous polypropylene membrane which comprises the steps of: (a) uniaxially cold stretching a non-porous crystalline polypropylene precursor to said membrane at a temperature in the range of between -20°C to 20°C below the crystalline melting point of the polypropylene precursor, said uniaxial cold stretching being such that said polypropylene precursor is extended at least 35% in length as compared to the initial length of said polypropylene precursor, said cold stretching step comprising a plurality of discrete cold stretching steps; and (b) uniaxially hot stretching in the same direction the cold stretched precursor achieved in the practice of step (a) at a temperature in the range of between 20°C below the crystalline melting point of the polypropylene precursor to 5°C below the crystalline melting point of the polypropylene precursor, whereby to achieve a microporous polymer membrane.

The present invention also provides a microporous polypropylene membrane obtainable by a process according to the invention, said microporous polypropylene membrane having an open-celled structure consisting of a dense plurality of interconnected pores, and characterised by having a reduced bulk density as compared to the bulk density of a corresponding nonopen-celled structure, and having a pore density of at least 75 pores per square µm of membrane surface area, wherein the pores have an average length of less than .10 µm, an average breadth of at least 0.035 µm, and an average surface area of less than 2.5 x 10⁻³ square µm.

The polypropylene membranes of the present invention are produced by subjecting a membrane precursor to an increased cold stretch which is preferably accomplished in multiple discrete uniaxial cold stretching steps prior to hot stretching. That is, the total amount of cold stretching of the membrane precursor is increased as compared to the cold stretching employed in conventional microporous membrane processes. And, this increased cold stretching is preferably distributed over multiple discrete cold stretching steps prior to hot stretching. The total cold stretch employed according to the present invention elongates the membrane precursor at least 35%, and advantageously greater than 40%, based upon its initial length prior to cold stretching, this total cold stretch being distributed over two or more (preferably two to four) discrete sequential cold stretching steps.

The membranes of the invention will also advantageously exhibit a pore morphology characteristic of conventional membranes obtained by sequential uniaxial cold and hot stretching techniques. That is, the membranes of this invention will have a plurality of elongated, non-porous, interconnecting surface regions which have their axes of elongation substantially parallel to each other, and substantially normal or perpendicular to the direction in which the membrane is stretched. Substantially alternating with and defined by the non-porous surface regions is a plurality of elongated, porous surface regions which contain a plurality of parallel fibrils. The fibrils are connected at each of their ends to the non-porous regions and are substantially perpendicular to them. A dense plurality of pores is thus defined between these fibrils.

The membranes of the present invention are open-celled and are particularly characterized by a reduced bulk density as compared to a corresponding membrane precursor having a nonopen-celled structure. Moreover, the membranes of this invention exhibit permeabilities (as determined by a gas flux of less than about 22 Gurley seconds), and an average pore density of greater than about 75 pores per square µm of membrane surface. The pores have an average length as measured in the direction of the longitudinal stretching of less than .10 µm (advantageously between .05 to .09 µm), an average pore breadth as measured in a direction perpendicular to the longitudinal stretching of less than .035 µm (advantageously between .024 to .035 µm), an average pore surface area of less than 2.5 x 10⁻³ square µm (advantageously between 0.9 x 10⁻³ to 2.5 x 10⁻³ square µm), an average pore radius as determined by mercury porosimetry of less than .040 µm (advantageously between about .0365 to .040 µm), and a specific surface area of greater than about 45 m²/g (i.e., as determined by BET analysis using a Quantasorb™ apparatus manufactured by the Quantachrome Corporation -- see also, S. Brunauer et al, Journal of American Chemical Society, vol. 60, pg. 309 (1938); and F. M. Nelson et al, Analytical Chemistry, vol. 30, pg. 1387 (1958), the entire content of each of these articles being expressly incorporated hereinto by reference, for a further discussion of BET analysis).

Moreover, the membranes of the present invention are translucent and exhibit a characteristic "bluish" color hue. Specifically, the membranes of this invention exhibit a b* value of less than -10, and more specifically between about -11 to about -14 when a single ply membrane sample is analyzed in a Macbeth Coloreye™ apparatus against a black background. The reasons for this "bluish" color hue are not fully understood at this time. However, without wishing to be bound to any particular theory, it is surmised that it is caused by the increased pore density and decreased pore size which apparently cause different diffusion and scattering of light in the visible spectrum as compared to conventional opaque membranes of similar geometry. This different scattering of light thus apparently translates into a visibly perceptible bluish color hue being imparted to the membranes of this invention.

The microporous membranes of the invention may be produced in film or fiber (e.g., hollow fiber) form and used in their as-produced form or further configured so as to suit a particular end use application in which it may be employed. For example, the membranes of the present invention may initially be in a hollow fiber form and then subsequently sliced longitudinally so as to then be in the form of a film. Thus, although reference has been, and will hereinafter be, made to the present invention being embodied in the form of a film, this is merely for ease of explanation and should be considered as being equally applicable to hollow fiber or other physical membrane forms.

Other aspects and advantages of this invention will become more clear after careful consideration is given to the following detailed description of the preferred exemplary embodiments.

### BRIEF DESCRIPTION OF THE DRAWINGS

Further understanding of this invention will be obtained with reference to the accompanying FIGURES, wherein:
FIGURE 1 is a schematic view of a preferred apparatus to mechanically produce microporous membranes according to the present invention;
FIGURE 2 is a photomicrograph of a conventional microporous membrane taken at 20,000X magnification;
FIGURE 3 is a photomicrograph of a microporous membrane of this invention taken at 40,000X magnification; and
FIGURES 4-6 are mercury porosimetry graphs comparing similar data for a microporous membrane of this invention and a conventional microporous membrane.

The polypropylene starting material from which the microporous membranes of this invention are produced is capable of developing a significant degree of crystallinity, as contrasted with more conventional or "classical" elastic materials such as the natural and synthetic rubbers which are substantially amorphous in their unstretched or tensionless state. Thus, the polymers from which the starting films employed in this invention may be employed will typically have a crystallinity of at least 20 percent, preferably at least 30 percent, and most preferably at least 50 percent. Moreover, elastic films formed from such a polymer will exhibit an elastic recovery at zero recovery time when subjected to a standard strain (extension) of 50 percent at 25°C and 65 percent relative humidity of at least about 40 percent, preferably at least about 50 percent, and most preferably at least about 80 percent.

In the practice of the present invention, it is preferred to employ an isotactic polypropylene having a percent crystallinity as indicated above, a weight average molecular weight ranging from about 100,000 to 750,000, and preferably about 200,000 to 500,000 and a melt index from about 0.1 to about 65, and preferably about 0.5 to 30, so as to give a final film product having the requisite physical properties.

Preferably, the starting films which may be employed in this invention are produced according to the well known blown film method. Briefly, the blown film method contemplates melt extruding the polymer through a circular die slot (dimensioned between about 0.25 to 5.08 mm (10 to 200 mils)) to form a tubular film having an initial diameter D₁ (and a thickness between 0.25 to 5.08 mm (10 to 200 mils) corresponding to the slot dimension). Air enters the system through an inlet into the interior of the tubular film and has the effect of "blowing up" the diameter of the tubular film to a diameter D₂. An air ring (or other suitable equivalent means) may be employed to direct quench air about the exterior of the extruded tubular film, while a cooling mandrel may be used to cool the interior of the tubular film. After a short distance (during which the film is allowed to completely cool and harden), the tubular film is collapsed and wound up on a take-up roll.

Another method which may be employed to produce the starting films of the invention is the slit die extrusion method. In this method, a melt of the polymer is extruded through a linear slot (dimensioned between about 0.025 - 0.5 cm (10 to 200 mils)) in a die so as to form a film and this extruded film is drawn via a suitable take-up or casting roll.

In either method, the drawdown ratio, or more simply, the draw ratio, which is defined as the ratio of the thickness of the extruded film (which is equivalent to the slot opening in the die) to the final thickness of the film is preferably in the range of between about 20:1 to 200:1. The draw ratio when spoken of in relation to slit die extrusion denotes the ratio of the film wind-up speed to the speed of the film issuing from the extrusion die. When using the blown film method, the ratio of the blown film to the unblown film or more simply the D₂/D₁ ratio, is in the range of between about 0.5:1 to 6.0:1, and more preferably 1.0:1 to about 2.5:1. The take-up speed when using the blown film method is preferably in the range of between about 3.05 to about 305 linear meters (about 10 to about 1,000 linear feet) of film per minute. In either method, the melt temperature for extrusion is preferably in the range of between about 10°C above the melting point of the polymer to about 100°C above the melting point of the polymer.

Independent of the extrusion method employed to form the elastic starting films employed in the present invention, the extruded film is preferably heat treated or annealed in order to improve crystal structure. The annealing step increases the size of the crystallites and removes imperfections therein. As a general rule, annealing is carried out at a temperature in the range of between about 5°C to 100°C below the melting point of the polymer for a period of a few seconds to several hours, e.g., 5 seconds to 24 hours, and more preferably from about 30 seconds to 2 hours. In the preferred embodiment in which polypropylene is employed, the preferred annealing temperature is in the range of between about 100°C and 155°C, for example.

A preferred method of annealing the elastic film employed in the instant invention is to place the extruded film in a tensioned or tensionless state in an oven at the desired temperature for a residence time as mentioned above, e.g., preferably for a time between 30 seconds to 2 hours.

As was previously mentioned, the novel microporous membranes of this invention may also be in the form of hollow fibers. In this regard, the starting hollow fibers employed in this invention may advantageously be made using the "up-spinning" technique disclosed in US-A-4,405,688 and US-A-4,451,981, each in the name of James J. Lowery et al, and each being expressly incorporated hereinto by reference. Briefly, non-porous precursor hollow fibers are produced according to the techniques disclosed in these prior patents by melt spinning the precursor fibers in a substantially vertically upward direction (i.e., up-spinning), and then spin orienting the thus melt spun hollow precursor fibers while subjecting them to a symmetrical quenching step using a hollow annular structure surrounding the precursor fiber which has one or more openings on its inner surface that distribute the quenching medium against the precursor fiber in a substantially uniform manner. The thus formed hollow precursor fiber may then be heat annealed in a manner similar to the film annealing procedure discussed previously. That is, annealing may be conducted by subjecting the non-porous precursor hollow fiber to a temperature of between about 5°C to 100°C for a time period of at least a few seconds (e.g., from a few seconds up to about 24 hours, preferably between about 30 minutes to about 2 hours).

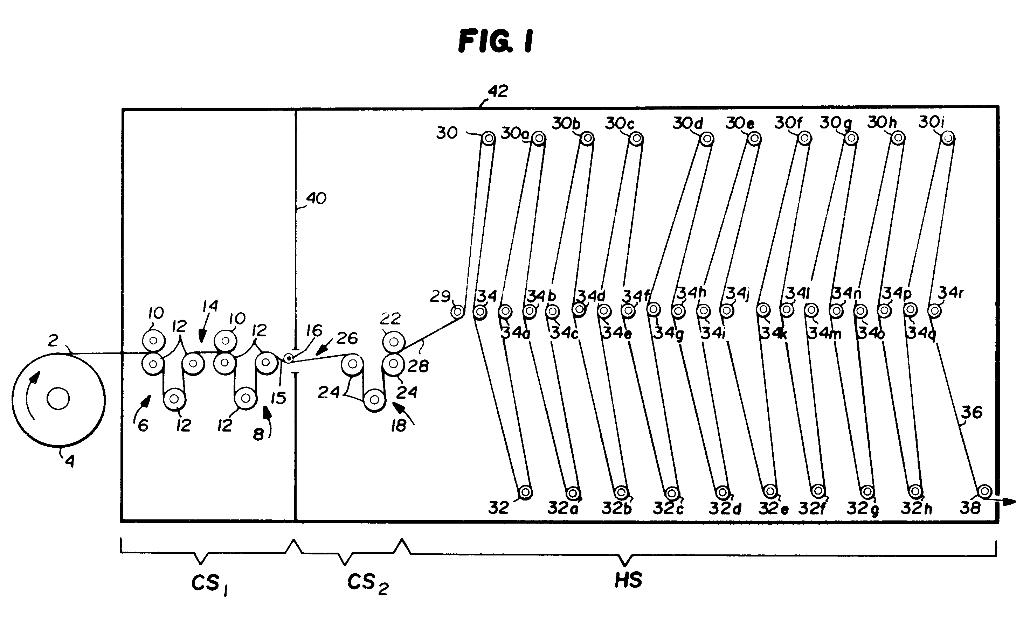

The non-porous precursor film or fiber (which will simply be referred to hereinafter as a film for ease of description) is now ready to be rendered microporous as will be discussed below with reference to accompanying FIGURE 1 which schematically depicts a presently preferred embodiment of this invention.

As is seen, a non-porous, elastic film 2 (which preferably has been heat annealed as discussed previously) is unrolled from a supply roll 4 into a first cold stretching zone designated generally as CS₁. The cold stretch zone CS₁ is generally comprised of longitudinally spaced sets of cold stretch rolls 6 and 8, respectively, each such set being composed of a nip roll 10 and a triad arrangement of stretching rolls 12. The stretching rolls 12 of roll set 6 are driven by any suitable drive means (not shown) at a peripheral speed S₁ which is less than the peripheral speed S₂ at which the stretching rolls 12 of roll set 8 are driven. Thus, the film 2 is stretched to a length L₁ between roll sets 6 and 8 at region 14 which is greater than the initial length of the nonporous annealed precursor film being unwound from supply roll 4.

The preliminarily cold stretched film (now designated by reference numeral 15) is then transferred via idler roll 16 to stretching roll set 18 within cold stretch zone CS₂. Roll set 18 (like the roll sets 6 and 8 described previously) is composed of a nip roll 22 and a triad arrangement of stretching rolls 24. The stretching rolls 24 of roll set 18 are driven at a peripheral speed S₃ which is greater than the peripheral speed S₂ at which the stretching rolls of roll set 8 are driven. Thus, the film 15 is further cold stretched to a length L₂ (which is greater than length L₁) between roll sets 8 and 18 at region 26.

The thus cold stretched film (now designated by reference numeral 28) is then passed, via idler roll 29, around roll 30 within the hot stretch zone HS, around idler roll 34 to hot stretch roll 32. Idler rolls 29 and 34 are provided in order to decrease the unsupported film web length during its stretching between roll set 18 and the first driven hot stretch roll 34. In this regard, the hot stretch roll 32 is driven by suitable means (not shown) at a peripheral speed S₄ which is greater than the peripheral speed S₃ imparted to the film 28 via roll set 18. Thus, stretching of the film 28 to a length L₃ greater than length L₂ occurs between roll set 18 and the first hot stretch roll 32.

The hot stretching procedure is continued for as many discrete steps as may be preferred. For example, the film web 28 is stretched in hot stretch zone HS between roll 32 and roll 32a, around upper roll 30a, with idler rolls 34a and 34b being interposed therebetween to again decrease the unsupported length of the film. The film is thus guided in a festoon-like arrangement sequentially from one of the lower stretch rolls to the next sequential one of the upper stretch rolls and then from that upper roll to the next sequential one of the lower rolls; for example from roll 32a to roll 30b; from roll 30b to roll 32b; from roll 32b to roll 30c; etcetera. It will be noted that between each set of hot stretch rolls, there are interposed idler rolls 34c-34r -- the purpose of which is to decrease the unsupported length of the film 28 during the hot stretching operation. The now microporous film (designated by reference numeral 36) exits the hot stretch zone HS via idler roll 38 and is passed to downstream processing stations (such as, for example, delamination (if more than a single ply of film was stretched), cutting, slitting, winding, packaging and the like).

At least some of the downstream-most rolls within the hot stretching zone HS (e.g., rolls 30f-30h and/or rolls 32f-32h) are preferably driven at peripheral speeds less than their respective sequential upstream roll so as to allow the stretched film to controllably relax. In this regard, the reader's attention is directed to the previously cited US-A-4,138,459 to Brazinsky et al (the entire disclosure of which is expressly incorporated hereinto by reference) for a more detailed discussion of the heat relaxing steps which may also be employed in the practice of this invention.

It will be noted that the cold stretch zone CS₁ is substantially thermally isolated from the cold and hot stretch zones CS₂ and HS, respectively via partition wall 40. Thus, a variety of temperature conditions may be caused to exist as between the cold stretch zones CS₁ and CS₂ (as will be explained in greater detail below). Cold stretch zone CS₁ is preferably maintained at ambient (i.e., room) temperature (e.g., about 25°C) but could optionally be supplied with chilled air so that the cold stretch zone CS₁ is operated at a temperature of between -25°C up to about 20°C below the melting point of the polymer which comprises the film being stretched.

The cold stretch zone CS₂ may also be operated at a temperature of between -25°C up to about 20°C below the melting point of the polymer comprising the film being stretched. Preferably, however, the cold stretch zone CS₂ is somewhat warmer as compared to the cold stretch zone CS₁ (but is nonetheless within the temperature range mentioned above) owing principally to the fact that the cold stretch zone CS₂ is located physically within the enclosure 42 defining the hot stretch zone HS.

Hot stretching in the hot stretch zone HS occurs at a temperature preferably in the range of between about 20°C below the crystalline melting temperature of the polymer which comprises the film to a temperature approximately 5°C below the crystalline melting point of the polymer. For example, polypropylene film is preferably hot stretched at a hot stretch temperature of between about 130°C and about 150°C. It should be appreciated that the "hot stretch temperature" and "cold stretch temperature" referred to herein is meant to denote the temperature of the film during hot and cold stretching, respectively.

Any convenient means to elevate the temperature within the hot stretching zone HS (and hence elevate the temperature of the film being stretched therein to its hot stretching temperature) may be employed in the practice of this invention. Thus suitable heating elements (e.g., electrical resistance elements, radiant energy sources, etcetera) may be employed to heat the environment within the hot stretching zone HS to achieve a predetermined suitable hot stretching temperature for the film. Alternatively, the rolls 30-30i and/or 32-32h may themselves be provided with suitable integral heating elements (e.g., electrical resistance heating elements) and/or supplied with a heated fluid (e.g., steam). In a similar manner, the roll sets 6, 8 and/or 18 in cold stretch zones CS₁ and/or CS₂ may be chilled by providing them with a suitable chilled fluid (e.g., chilled water) in addition, or as an alternative, to the introduction of chilled air into e.g., zone CS₁ as was briefly mentioned above.

It will be observed that the stretching which occurs between roll set 18 (physically located within the enclosure 42 defining both the cold and hot stretch zones CS₂ and HS) and the roll set 8 (physically located in cold stretch zone CS₁) is not technically a "hot stretching step" since the film 15 has not yet been elevated to its hot stretching temperature (i.e., as was defined above) within the enclosure 42. Rather, the film 15 does not actually achieve a hot stretching temperature until some point downstream of roll set 18 -- i.e., at some point within the hot stretching zone HS. Thus, the stretching which occurs between the roll sets 8 and 18 constitutes, for purposes of this invention, another discrete cold stretching step, and thus has been designated cold stretching zone CS₂.

Surprisingly, it has been discovered that novel microporous membranes are formed having smaller pore sizes and increased pore densities when the total cold stretch extension imparted to the film is greater than 30%, and more advantageously greater than 40% as compared to the initial length of the precursor film. This cold stretching is moreover preferably accomplished in multiple discrete cold stretching steps. In this manner, the combined effect of increasing the total amount of extension imparted to the film during cold stretching, and preferably distributing this increased total cold stretching among a number of discrete cold stretching steps results in a membrane having lesser pore sizes and greater pore densities as compared to microporous membranes of the prior art which were not produced using the cold stretching technique of this invention.

According to this invention, the amount of film stretching which is accomplished for each cold stretching step should be distributed (preferably substantially evenly) among the plural cold stretch steps employed. For example, where two cold stretch steps are employed as is shown in Figure 1, the film should be stretched in length to an amount greater than about 1.15:1 (i.e., greater than about 15 percent) based upon the film's starting length before such cold stretching step in each of the regions 14 and 26 to thereby achieve a "total" cold stretch of greater than 1.30:1 (i.e., greater than 30%). This stretching will hereinafter be termed the "cold stretch ratio" or "cold extension", and may sometimes be expressed in terms of a percentage of stretch. Thus, in each of the regions 14 and 26, (see FIGURE 1), the rolls are driven so as to achieve a total cold stretch ratio of greater than about 1.30:1 (i.e., the film is stretched greater than 30 percent in length as compared to its starting length before such cold stretching steps), and more preferably greater than 1.40:1 (i.e., greater than 40%). On the other hand, if four discrete cold stretch steps are employed, then the total cold stretching is distributed among these four cold stretch steps -- for example, with two steps stretching the film to greater than 1.10:1 and the remaining two steps stretching the film to greater than 1.05:1 so as to achieve a "total" cold stretch which is greater than 1.30:1 (and preferably greater than 1.40:1).

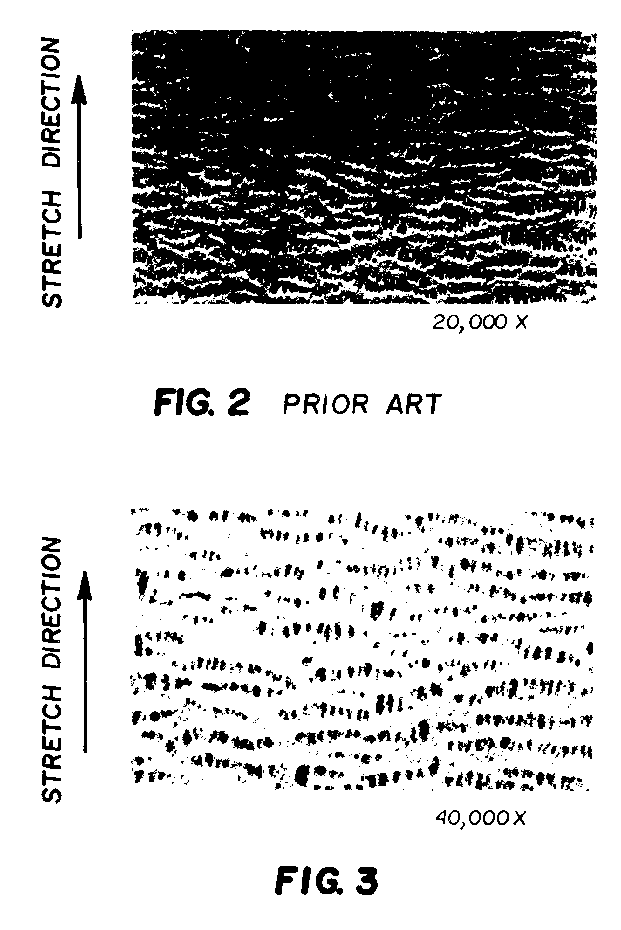

FIGURE 2 is a photomicrograph of a prior art microporous polypropylene membrane (Celgard® 2400 microporous film commercially available from the Separations Products Division, Hoechst Celanese Corporation, Charlotte, North Carolina) taken at a magnification of 20,000x. The membrane of FIGURE 2 thus shows the classic morphology of membranes produced by uniaxial cold and hot stretching operations. That is, the membrane morphology of FIGURE 2 is one which has a plurality of elongated, non-porous interconnecting surface regions which have their axes of elongation substantially parallel to one another and substantially perpendicular to the direction in which the membrane is stretched. Also visible in FIGURE 2 are the elongated porous surface regions substantially alternating with and defined by the non-porous surface regions with a number of fibrils interconnecting adjacent non-porous regions in the stretch direction. Between these fibrils are the pores.

FIGURE 3 is a photomicrograph of a polypropylene microporous membrane according to this invention. As is seen, a very similar pore morphology is present as compared to the prior art membrane of FIGURE 2. Significantly however, in order to obtain roughly comparable pore resolution in the photomicrograph, a magnification of 40,000x was required -- i.e., twice the magnification of FIGURE 2. This indicates qualitatively the decreased pore sizes and increased pore densities of the membranes of this invention as compared to similarly configured membranes of the prior art --i.e., as compared to membranes which were not produced using the cold stretching techniques of this invention.

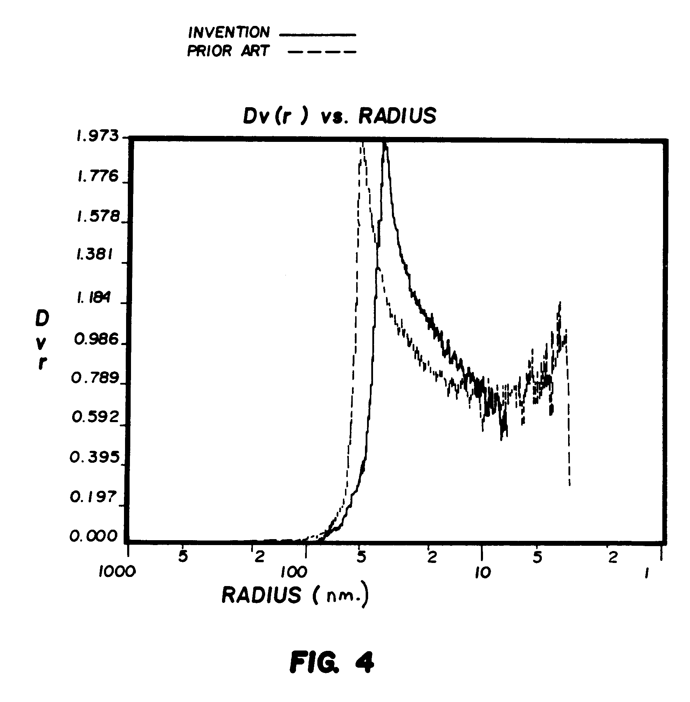

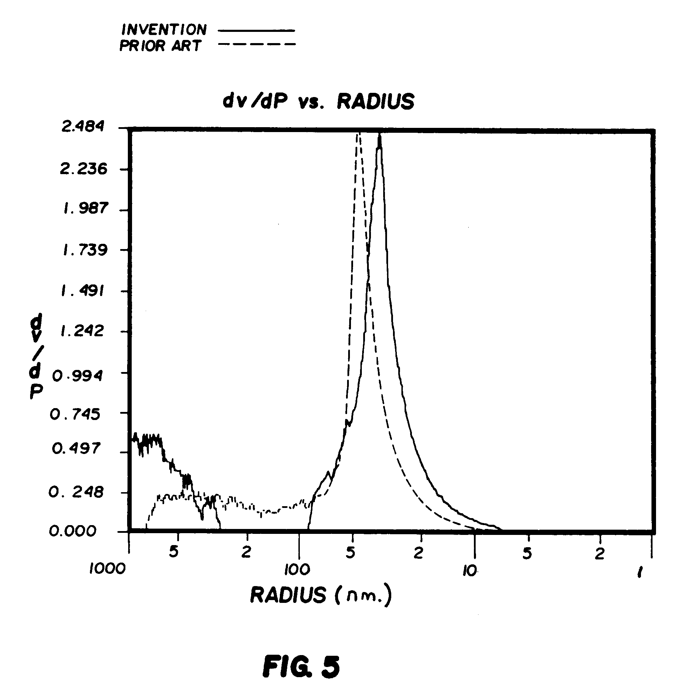

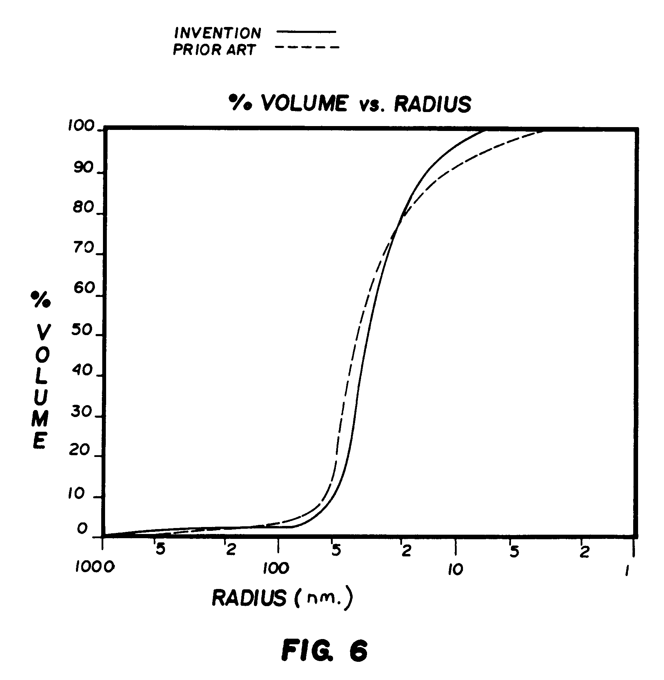

FIGURES 4-6 are graphs obtained using mercury porosimetry analysis and compare a polypropylene microporous membrane according to this invention to a prior art polypropylene microporous membrane (i.e., Celgard® 2400 microporous film). Interpretation of these graphs shows an average pore size of the membrane of this invention to be about .036 µm in radius as compared to an average pore size of about .048 µm in radius for the prior art membrane. These data also indicate that, since the area of the pores is proportional to the square of the pore radius, the area of the pores in the membranes of this invention is about 0.56 times the area of the pores in the prior membrane -- or, a reduction of pore area of about one-half. Attention is directed to "Application of Mercury Penetration to Materials Analysis", Clyde Orr, Jr., Powder Technology, 3, pgs. 117-123 (1969/70), the entire content of which is expressly incorporated hereinto by reference, for a more detailed discussion of mercury porosimetry analysis.

Further aspects of this invention will become more clear after careful consideration is give to the following non-limiting Examples:

### EXAMPLE I

Microporous polypropylene membranes were prepared according to the following stretching conditions using multiple discrete cold stretching steps (e.g., 2) followed sequentially by multiple (e.g., 17) hot stretching steps (some of which were relaxation steps):

| | | |
|---|---|---|
| Stretch Zones | % Extension | |

| | Sample A | Sample B |
|---|---|---|
| CS₁ | 15.00 | 9.00 |
| CS₂ | 20.00 | 15.00 |
| HS | | |
| #1 | 23.00 | 23.00 |
| #2 | 21.00 | 21.00 |
| #3 | 5.00 | 5.00 |
| #4 | 4.00 | 4.00 |
| #5 | 4.00 | 4.00 |
| #6 | 3.00 | 3.00 |
| #7 | 3.00 | 3.00 |
| #8 | 3.00 | 3.00 |
| #9 | 2.00 | 2.00 |
| #10 | 2.00 | 2.00 |
| #11 | 0.00 | 0.00 |
| #12 | 0.00 | 0.00 |
| #13 | -3.19 | -3.19 |
| #14 | -3.30 | -3.30 |
| #15 | -3.41 | -3.41 |
| #16 | -3.53 | -3.53 |
| #17 | -3.66 | -3.66 |

As is seen, Sample A was subjected to a greater total cold stretch as compared to that employed in Sample B (i.e., 35% for Sample A as compared to 24% for Sample B). In addition, each of the cold stretching steps employed in the production of Sample A was 15% or greater whereas the cold stretching employed in the production of Sample B in CS₁ was significantly less than 15% (i.e., 9.00%) even though the stretching employed in CS₂ was 15%. The temperature of CS₁ in Sample A was 55°C to 70°C whereas the temperature of CS₁ in Sample B was 25°C to 30°C (i.e., room temperature). The membrane of Sample A showed a distinctive "bluish" color hue characteristic of the membranes of this invention, while the membrane of Sample B did not exhibit a "bluish hue" but rather was opaque and white.

Permeability measurements of Samples A and B showed that Sample A exhibited Gurley Values of between 16-22 Seconds, whereas Sample B exhibited Gurley Values of 29-35. Thus, significantly better permeabilities are achieved with the membranes of this invention, it being remembered that the lesser the Gurley Value, the greater the ease of mass transfer across the membrane, and hence the better the permeability for the membrane.

### EXAMPLE II

Microporous polypropylene membrane films were produced using the following cold stretching steps:

| | % Extension | | |
|---|---|---|---|
| | Sample C | Sample D | Sample E (comparative) |
| CS₁ | 15 | 25 | 18 |
| Cs₂ | 15 | 25 | 6 |
| Total stretch | 150 | 150 | 138 |
| Net stretch | 100 | 100 | 100 |

The membrane films exhibited the following properties:

| Image Analysis of scanning electronic microscope photos | Sample C | Sample D | Sample E (comparative) |
|---|---|---|---|
| Avg. pore length (µm) | .09 | .05 | 0.11 - 0.13 |
| Avg. pore breadth (µm) | .035 | .024 | .033 -.038 |
| Avg. pore surface area (µm² x 10⁻³) | 2.4 | 0.9 | 2.8 to 4.1 |

| Mercury Porosimetry | | | |
|---|---|---|---|
| Avg. pore radius (µm) | .0383 | .0365 | .0540 |

| BET Analysis | | | |
|---|---|---|---|
| Specific Surface Area (m²/g) | -- | 49.5 | 38.9 |

As is apparent from the foregoing, Samples C and D according to this invention (i.e., since the total cold stretch being greater than 30%), exhibited pore sizes which are significantly less as compared to the pore sizes of comparative Sample E not in accordance with this invention (i.e., since the total cold stretch was 24%). Also, it will be noted that the specific surface area of Sample D according to this invention is significantly greater than the specific surface area of Comparative Example E indicating that the membranes of this invention also had increased pore densities.

### EXAMPLE III

The microporous membrane Samples C, D and E were tested for coloration (b* value) using a Macbeth Coloreye™ apparatus wherein a single ply of each microporous membrane was tested against a black background so as to more closely simulate light transmissive qualities. The results appear below:

| Sample | b* Value |
|---|---|
| C | -11.48 |
| D | -14.02 |
| E | -7.00 |

It will be noted that each of the membranes of this invention have b* values of less than -10 thereby indicating greater coloration (i.e., indicative of the "bluish hue") as compared to the prior art membrane of comparative Sample E.

### EXAMPLE IV

The pore density of Samples C and D according to this invention were qualitatively determined and appear below in comparison to pore densities of a prior art Celgard® 2400 microporous polypropylene film.

| | Pore Density (# of pores/square µm) |
|---|---|
| Sample C | 75 |
| Sample D | 105 |
| Celgard® 2400 | 35-54 |

The above data demonstrate that the membranes of this invention exhibit pore densities about twice that of a conventional microporous polypropylene membrane.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A process to prepare an open-celled, microporous polypropylene membrane which comprises the steps of:
(a) uniaxially cold stretching a non-porous crystalline polypropylene precursor to said membrane at a temperature in the range of between -20°C to 20°C below the crystalline melting point of the polypropylene precursor, said uniaxial cold stretching being such that said polypropylene precursor is extended at least 35% in length as compared to the initial length of said polypropylene precursor; and
(b) uniaxially hot stretching in the same direction the cold stretched precursor achieved in the practice of step (a) at a temperature in the range of between 20°C below the crystalline melting point of the polypropylene precursor to 5°C below the crystalline melting point of the polypropylene precursor, whereby to achieve a microporous polypropylene membrane characterised in that said cold stretching step comprises two or more discrete cold stretching steps.

2. A process according to claim 1, wherein said cold stretch ratio is achieved by distributing the cold stretching ratio substantially evenly among said discrete cold stretching steps.

3. A process according to any preceding claim, wherein the total amount of extension accomplished by the said cold stretching according to step (a) is greater than 40% based upon the starting length of the said polypropylene precursor before cold stretching.

4. A process according to any preceding claim, wherein said polypropylene precursor is in the form of a film.

5. A process according to any preceding claim, wherein said polypropylene precursor is in the form of a hollow fiber.

6. A process according to any preceding claim, which further comprises, prior to step (a), the step of heat annealing the polypropylene precursor.

7. A microporous polypropylene membrane obtainable by a process according to any preceding claim, said microporous membrane having an open-celled structure consisting of a dense plurality of interconnected pores, having a reduced bulk density as compared to the bulk density of a corresponding nonopen-celled structure, and having a pore density of at least 75 pores per square µm of membrane surface area wherein the pores have an average length of less than .10 µm, an average breadth of up to 0.035 µm, and an average surface area of less than 2.5 x 10⁻³ square µm.

8. A microporous polypropylene membrane according to claim 7 further characterized by having a permeability of less than 22 Gurley seconds.

9. A microporous polypropylene membrane according to claim 7, which has a permeability of between 16 and 22 Gurley seconds.

10. A microporous polypropylene membrane according to any of claims 7 to 10, having an open-celled structure, an average pore radius as determined by mercury porosimetry of less than .040 µm, and a Macbeth Coloreye b* value of less than -10 as determined by placing a single ply sample of the membrane against a black background.

## Patentansprüche

1. Verfahren zur Herstellung einer offenzelligen, mikroporösen Polypropylen-Membran, umfassend die Stufen:
(a) einachsiges Kaltverstrecken eines nicht-porösen, kristallinen Polypropylen-Vorläufers an die Membran bei einer Temperatur im Bereich von -20°C bis 20°C unterhalb des kristallinen Schmelzpunkts des Polypropylen-Vorläufers, wobei das einachsige Kaltverstrecken derartig erfolgt, daß der Polypropylen-Vorläufer um wenigstens 35% längsgedehnt wird, verglichen zu der anfänglichen Länge des Polypropylen-Vorläufers, und
(b) einachsiges Heißverstrecken des kaltgestreckten Vorläufers in der gleichen Richtung, die in der Praxis der Stufe (a) erreicht wurde, bei einer Temperatur im Bereich zwischen 20°C unterhalb des kristallinen Schmelzpunkts des Polypropylen-Vorläufers und 5°C unterhalb des kristallinen Schmelzpunkts des Polypropylen-Vorläufers, um so eine mikroporöse Polypropylen-Membran zu erhalten,
dadurch gekennzeichnet, daß die Kaltverstreckungsstufe zwei oder mehr diskrete Kaltverstreckungsstufen umfaßt.

2. Verfahren gemäß Anspruch 1, worin das Kaltverstreckungsverhältnis durch im wesentlichen gleichmäßiges Verteilen des Kaltverstreckungsverhältnisses auf die diskreten Kaltverstreckungsstufen erreicht wird.

3. Verfahren gemäß irgendeinem der vorhergehenden Ansprüche, worin die gesamte Menge an Dehnung, die durch das Kaltverstrecken gemäß Stufe (a) erreicht wird, größer als 40% ist, bezogen auf die Ausgangslänge des Polypropylen-Vorläufers vor dem Kaltverstrecken.

4. Verfahren gemäß irgendeinem der vorhergehenden Ansprüche, worin der Polypropylen-Vorläufer in Form einer Folie vorliegt.

5. Verfahren gemäß irgendeinem der vorhergehenden Ansprüche, worin der Polypropylen-Vorläufer in Form einer Hohlfaser vorliegt.

6. Verfahren gemäß irgendeinem der vorhergehenden Ansprüche, welches weiterhin vor Stufe (a) die Stufe des Heißtemperns des Polypropylen-Vorläufers umfaßt.

7. Mikroporöse Polypropylen-Membran, die durch ein Verfahren gemäß irgendeinem der vorhergehenden Ansprüche erhältlich ist, wobei die mikroporöse Membran eine offenzellige Struktur, bestehend aus einer dichten Vielfalt miteinander verbundener Poren, aufweist, eine reduzierte scheinbare Dichte verglichen mit der scheinbaren Dichte einer entsprechenden nicht-offenzelligen Struktur hat, und eine Porendichte von wenigstens 75 Poren pro µm² der Membranoberfläche hat, worin die Poren eine durchschnittliche Länge von weniger als 0,10 µm, eine durchschnittliche Breite von bis zu 0,035 µm und eine durchschnittliche Oberfläche von weniger als 2,5 x 10⁻³ µm² haben.

8. Mikroporösen Polypropylen-Membran gemäß Anspruch 7, weiterhin dadurch gekennzeichnet, daß sie eine Permeabilität von weniger als 22 Gurley-Sekunden hat.

9. Mikroporösen Polypropylen-Membran gemäß Anspruch 7, die eine Permeabilität zwischen 16 und 22 Gurley-Sekunden hat.

10. Mikroporöse Polypropylen-Membran gemäß irgendeinem der Ansprüche 7 bis 10, die eine offenzellige Struktur, einen durchschnittlichen Porenradius - wie er durch Quecksilber-Porosimetrie bestimmt wird - von weniger als 0,040 µm und einen Macbeth Coloreye b*-Wert - wie er durch Anordnen einer Einzelschichtprobe der Membran gegen einen schwarzen Hintergrund bestimmt wird - von weniger als -10 hat.

## Revendications

1. Procédé de préparation d'une membrane de polypropylène microporeuse, à cellules ouvertes, qui comprend les étapes consistant :
a) à soumettre à un étirage uniaxial à froid un précurseur de ladite membrane constitué de polypropylène cristallin non poreux, à une température comprise dans l'intervalle de -20°C à une valeur inférieure de 20°C au point de fusion cristalline du précurseur consistant en polypropylène, ledit étirage uniaxial à froid étant tel que ledit précurseur consistant en polypropylène subisse une extension d'au moins 35 % de la longueur comparativement à la longueur initiale dudit précurseur consistant en polypropylène ; et
b) à soumettre à un étirage uniaxial à chaud dans la même direction le précurseur étiré à froid obtenu dans la mise en oeuvre de l'étape (a) à une température comprise dans l'intervalle d'une valeur inférieure de 20°C au point de fusion cristalline du précurseur consistant en polypropylène à une valeur inférieure de 5°C au point de fusion cristalline du précurseur consistant en polypropylène, ce qui permet d'obtenir une membrane de polypropylène microporeuse, caractérisé en ce que l'étape d'étirage à froid comprend deux ou plus de deux étapes distinctes d'étirage à froid.

2. Procédé suivant la revendication 1, dans lequel le rapport d'étirage à froid est atteint par distribution du rapport d'étirage à froid pratiquement uniformément parmi les étapes distinctes d'étirage à froid.

3. Procédé suivant l'une quelconque des revendications précédentes, dans lequel la valeur totale d'extension atteinte par l'étirage à froid conformément à l'étape (a) est supérieure à 40 % sur la base de la longueur de départ du précurseur consistant en polypropylène avant étirage à froid.

4. Procédé suivant l'une quelconque des revendications précédentes, dans lequel le précurseur consistant en polypropylène est sous forme d'un film.

5. Procédé suivant l'une quelconque des revendications précédentes, dans lequel le précurseur consistant en polypropylène est sous forme d'une fibre creuse.

6. Procédé suivant l'une quelconque des revendications précédentes, qui comprend en outre, avant l'étape (a), l'étape de recuit à chaud du précurseur consistant en polypropylène.

7. Membrane de polypropylène microporeuse pouvant être obtenue par un procédé suivant l'une quelconque des revendications précédentes, ladite membrane microporeuse ayant une structure à cellules ouvertes consistant en une pluralité dense de pores interconnectés ayant une densité apparente réduite comparativement à la densité apparente d'une structure à cellules non ouvertes correspondante, et ayant une densité des pores d'au moins 75 pores par µm² de surface de membrane, les pores ayant une longueur moyenne inférieure à 0,10 µm, une largeur moyenne allant jusqu'à 0,035 µm et une surface moyenne inférieure à 2,5 x 10⁻³ µm².

8. Membrane de polypropylène microporeuse suivant la revendication 7, caractérisée en outre par une perméabilité inférieure à 22 secondes Gurley.

9. Membrane de polypropylène microporeuse suivant la revendication 7, qui a une perméabilité de 16 à 22 secondes Gurley.

10. Membrane de polypropylène microporeuse suivant l'une quelconque des revendications 7 à 10, ayant une structure à cellules ouvertes, un rayon moyen des pores, tel qu'il est déterminé par porosimétrie au mercure, inférieur à 0,040 µm, et une valeur Macbeth Coloreye b* inférieure à -10 telle qu'elle est déterminée en plaçant un échantillon à un seul pli de la membrane contre un fond noir.
